# EUROPEAN PATENT APPLICATION

(11) **EP 2 528 356 A1**
(43) Date of publication of application: **28.11.2012**
(21) Application number: 11167387.7
(22) Date of filing: 25.05.2011
(51) Int. Cl.: H04R 25/00

(54) **Voice dependent compensation strategy**

(71) Applicant: Oticon A/S, 2765 Smørum (DK)
(72) Inventor: Rasmussen, Karsten Bo, DK-2765, Smørum (DK)
(74) Representative: Nielsen, Hans Jörgen Vind

(57) **Abstract**

The present invention relates to listening device (100) for carrying out a voice dependent compensation strategy in order to increase speech intelligibility, especially for people with a severe hearing impairment. The listening device (100) comprises an input transducer (110) configured to receive an acoustic input signal and to convert the acoustic input signal into an electric input signal (112) and an analyser (120) that is coupled to the input transducer (110) and that is configured to determine values of a number of characteristic speech parameters of the electric input signal (112) and to identify an individual voice in the electric input signal (112) in dependence of the determined values, the individual voice being one of a number of individual voices for which characteristic speech parameter values are stored in a recognition memory (122) of the listening device. Furthermore, the listening devices comprises a controller (130) coupled to the analyser (120) and configured to control a signal processor (140) of the listening device (100) by adjusting process parameters according to which the signal processor (140) is to process the electric input signal (112) to an output signal (142) to be presented to a wearer of the listening device (100) in dependence of the identified individual voice (126). The present invention also relates to a corresponding operating method and to a corresponding computer program.

## Description

### Technical field

The present invention relates to a listening device adapted to adjust itself to an individual voice of a speaker speaking to a wearer of the listening device. The present invention is furthermore related to a corresponding operating method of operating a listening device and to a corresponding computer program.

### Background of the invention

For a person with a pronounced hearing impairment speech intelligibility can be unsatisfactory, even if the person is equipped with a modern state of the art hearing instrument. Such hearing instrument is, for instance, disclosed in United States patent application publication US 2009/0185704 A1. The hearing aid described in this publication is adapted to determine a fundamental frequency of an acoustic input signal and to adjust amplification parameters in dependence of that determined fundamental frequency. By determining the fundamental frequency, the hearing instrument can distinguish between a child voice, a female voice and a male voice. Thus, if the determined fundamental frequency corresponds to a child voice, the amplification parameters of the hearing instruments are adjusted such that an intelligibility of a child voice is increased. In another case, where the fundamental frequency corresponds to a male voice, the hearing instrument is adjusted according to amplification parameters such that intelligibility of a male voice is increased for the wearer of the hearing instrument. It is furthermore described that the hearing instrument can be operated in a learning mode that defines different classes of voices and corresponding fundamental frequency ranges. The fundamental frequency ranges corresponding to different classes of voices are adapted to individual voice types, e. g. the voices of persons of the family or of persons frequently engaged, e. g., in a working environment.

However, people with a very pronounced hearing impairment can still consider the speech intelligibility to be unsatisfactory, even if their respective hearing instruments are adapted to determine that an incoming voice can be associated to a voice class and to adjust themselves according to a certain voice class.

### Summary of the invention

It is a technical object of the present invention to provide a listening device for a person with a pronounced hearing impairment, wherein speech intelligibility is increased with respect to a speaker's individual voice. It is also a technical object of the present invention to provide a corresponding operating method of operating a listening device and a corresponding computer program.

According to a first aspect of the present invention, the above identified object is achieved by a listening device comprising:
- an input transducer configured to provide an electric input signal representing an audio signal,
- an analyser coupled to the input transducer and comprising a recognition memory configured to store predetermined characteristic speech parameter values for each of a number of individual voices, wherein the analyser is configured to determine values of a number of characteristic speech parameters of the electric input signal and to identify an individual voice in the electric input signal in dependence of the determined values, the individual voice being one of the number of individual voices,
- a controller coupled to the analyser and configured to control a signal processor of the listening device by adjusting process parameters according to which the signal processor is to process the electric input signal to an output signal to be presented to a wearer of the listening device in dependence of the identified individual voice.

The present invention includes the recognition that according to the known prior art hearing instrument, at best a voice class is determined and the prior art hearing instrument adjusted to the determined voice class. However, even within such voice class, for instance voice class "female voice", there may be significant differences between two voices of the same class, for instance between two female voices. A first female voice could be loud and concise and might have a low fundamental frequency and a second female voice could be quiet and unarticulated and might have a very high fundamental frequency. Hence, processing parameters that enhance speech intelligibility of the first female voice must not necessarily enhance speech intelligibility of the second female voice, even if both female voices belong to the same voice class. For people with a very pronounced hearing impairment, it is rather appropriate to adjust a listening device exactly to the voice of a speaker speaking to the hearing impaired person or, respectively, to exactly the voice of the hearing impaired person, if the hearing impaired person is speaking.

In an embodiment, the signal processor is adapted to process the electric input signal to an output signal to compensate for a pronounced hearing loss of a user of the listening device. A pronounced hearing loss can e.g. be a moderate to severe hearing loss, e.g. a hearing loss in the range from 40 to 90 dB at one or more particular frequencies or in a particular frequency range of the human audible frequency range. In an embodiment, the hearing loss is determined as the pure-tone average hearing loss defined by the average hearing thresholds at a number of relevant frequencies, e.g. at frequencies 500 Hz, 1 kHz, and 2 kHz.

Therefore, the analyzer of the listening device analyzes the electric input signal and determines values of a number of characteristic speech parameters, such as the fundamental frequency, and identifies the individual voice of the speaker in dependence of the determined values. The number of recognizable voices, that is to say: the number of individual voices for which respective characteristic speech parameters values are stored in the recognition memory, is limited, for instance to voices of family members, friends and/or other key persons of the wearer of the listening device.

The controller controlling the signal processor of the listening device adjusts process parameters such that the intelligibility of the output signal is increased with respect to the identified individual voice of the speaker speaking to the wearer of the listening device.

In the outcome, the listening device is adapted to automatically perform a designated signal processing, wherein a precise individual voice is amplified such that in particular the intelligibility of this individual voice is increased. In other words, amplification parameter are automatically adjusted according to the identified individual voice. Thus, the wearer of the listening device can more easily understand what key persons are saying to him/her.

For identifying the individual voice, the analyzer comprises, in a preferred embodiment of the listening device,
- a comparator coupled to the recognition memory and configured to compare the determined values of the electric input signal with the stored values and to generate a comparison result signal in dependence of the comparison, wherein the analyser is configured to identify the individual voice of a speaker based on the comparison result signal.

For instance, the comparison result signal yields that the determined values of the electric input signal are identical to or, respectively, lie within a predetermined range surrounding a set of stored values belonging to one specific of the number of individual voices, e.g. within +/- 50%, such as within +/- 20%, such as within +/- 10% of the stored values, e.g. depending on the parameter in question, or its unit of measure, e.g. whether or not it is provided in a logarithmic or a linear scale. If so, the analyzer determines that the individual voice of a speaker producing the acoustic input signal (and/or the electric signal representing audio) is identical to the specific individual voice.

In another preferred embodiment, the controller comprises a control memory configured to store for each of the number of individual voices a set of processing parameters. In this embodiment, the controller is configured to choose one set of the number of stored sets of processing parameters, if the identified individual voice is determined to be identical to one of the number of individual voices, and to control the signal processor with that chosen set of processing parameters. Each of the set of processing parameters is determined such that the intelligibility of the respective associated individual voice is individually increased. It shall be understood, that one of the number of individual voices can also be the voice of the wearer of the listening device.

For instance, each set of processing parameters for a respective individual voice has been determined within a refined fitting process including use of playback of a recording of the respective individual voice. For such fitting process, the designated wearer of the listening device can thus bring either recordings of the individual voice to be recognized/identified later on by the listening device or have him/her accompanied by respective key persons whose voices are to be recognized. During the fitting process, for each individual voice to be recognized later on, the set of processing parameters can be determined such that the intelligibility of the individual voice is individually increased and optimized for the needs of the designated wearer. Also, characteristic parameters of such individual voices can be determined and stored in the recognition memory during the fitting process. The processing parameters for such individual voices are stored in the control memory of the listening device. Thus, after the refined fitting process, the listening device can recognize an individual voice of a key person of the wearer of the listening device and can automatically adjust itself to the recognized/identified individual voice, such that the intelligibility of the identified voice is increased.

In a preferred embodiment, the recognition memory is configured to store predetermined characteristic speech parameter values of a voice of a wearer of the listening device and the control memory is configured to store a personal set of processing parameters adapted to the wearer's voice such that the sound of the wearer's own voice is enhanced (e.g. to be perceived by the user to be as comfortable and natural as possible), if the signal processor processes an electric input signal originating from the wearer.

Thus, in this embodiment, speech intelligibility can not only be increased for voices of key persons of the wearer, but also for his/her own voice, if the wearer's voice is identified.

If the listening device fails to identify an individual voice in the electric input signal, the listening device shall be operated according to a conventional amplification strategy. Thus, it is preferred that the listening device is additionally configured to operate either in a conventional mode or in a speech optimization mode, wherein
- in the conventional mode, the analyser has not determined an individual voice in the electric input signal and the controller is configured to control the signal processor according to predetermined processing scheme (e.g. according to a default set of processing parameters (default program) for the acoustic situation in question) and
- in the speech optimization mode, the analyser has identified the individual voice in the electric input signal and the controller is configured to control the signal processor with the with the chosen set of processing parameters, the chosen set of processing parameters overruling the predetermined processing scheme.

It another embodiment, the listening device is configured to be set to a learning mode, wherein in the learning mode, the analyser is configured to extract characteristic speech parameter values from the electric input signal and to define a new individual voice by storing the extracted characteristic speech parameter values associated to a new individual voice identifier in the recognition memory. It is furthermore preferred that, in the learning mode, the controller is configured to define a new set of processing parameters according to which intelligibility of the new individual voice is increased for the hearing impaired person, e.g. in dependence of inputs from the hearing impaired person during the learning mode (e.g. via a user interface, e.g. a remote control). Alternatively or additionally, the new set of processing parameters is determined automatically, e.g. based on the already stored sets of processing parameters corresponding to respective known individual voices. In an embodiment, the new set of processing parameters is determined as the set of processing parameters chosen among the already stored sets of processing parameters for which the corresponding characteristic speech parameter values most closely resemble the characteristic speech parameter values of the new individual voice. In an embodiment, the new set of processing parameters is determined by interpolation or averaging between the two sets of already stored processing parameters for which the corresponding characteristic speech parameter values most closely resemble the characteristic speech parameter values of the new individual voice.

Thus, if the hearing impaired person encounters a new key person whose voice is not yet one of the number of individual voices, the hearing impaired person can set the listening device to the learning mode and initiate storing of both new characteristic speech parameter values and defining and storing a new set of associated processing parameters, thereby expanding the number of recognizable individual voices.

In an embodiment, a control unit, for instance a remote control unit, is coupled to the listening device that allows the wearer of the listening device to switch between the aforementioned operating modes. For instance, the listening device operates in the conventional mode, if the wearer has set the listening device correspondingly or, respectively, if no voice can be identified in the electric input signal. If a voice can be identified in the electric input signal and if the listening device is set to speech optimization mode, the listening device adjusts itself automatically to increase intelligibility of the identified voice as explained above.

In a preferred embodiment, the analyzer is configured to determine a value of a characteristic frequency, e. g., the fundamental frequency, in the electric input signal as one of the number of characteristic speech parameter values. Thus, the analyzer preferentially comprises a frequency analyzer. The meaning of the term "fundamental frequency" is to be understood to follow its established definition in speech acoustics. In most cases, it is the smallest frequency at which the vocal folds vibrate.

Alternatively or additionally, the analyzer is furthermore configured to determine a frequency value of a characteristic overtone in the electric input signal as one of the number of characteristic speech parameters values. It is preferred that the analyzer is configured to determine both the value of the fundamental frequency plus the frequency values of characteristic overtones in the electric input signal. Alternatively or additionally, the amplitude level of one or more of the mentioned overtones relative to the level of the fundamental frequency may be used as characteristic speech parameter value(s).

Alternatively or additionally, the analyzer can determine a time value of a characteristic temporal pattern in the electric input signal as one of the number of characteristic speech parameter values.

According to the determined values, the analyzer can identify an individual voice in the electric input signal. As indicated before, this identification can be based on a comparison between the determined values with stored values. This identification may take as much as a few seconds, but the present invention rather focuses on basic speech understanding for individuals with a very pronounced hearing impairment and limited ability to understand speech.

A processing parameter for the signal processor can be any parameter common in acoustic signal processing. For instance the processing parameters include at least one of a time constant, a frequency dependent amplification parameter, a frequency compressions scheme. Processing parameters can e.g. relate to algorithms for noise reduction, amplification, compression, directionality and/or feedback cancellation.

Furthermore, it is preferred that the input transducer comprises a wireless transceiver configured to provide an electric input signal representing audio. The input transducer can furthermore or alternatively comprise a microphone (or a microphone system) and possibly an analogue-to-digital converter connected downstream thereof and configured to provide an electric input signal representing audio.

The listening device of the first aspect of the invention can be any kind of a hearing aid, a hearing instrument, a headset, an earphone, a behind-the-ear component, a completely-in-the-ear component, etc.

According to a second aspect of the present invention, the above identified technical object is achieved by a method of operating a listening device, the method comprising steps of
- receiving an electric input signal representing an audio signal,
- determining values of a number of characteristic speech parameters of the electric input signal,
- identifying an individual voice in the electric input signal in dependence of the determined values, the individual voice being one of a number of individual voices for which characteristic speech parameter values are stored in a recognition memory of the listening device, and
- adjusting processing parameters for processing the electric input signal into an output signal to be presented to a wearer of the listening device in dependence of the indentified individual voice.

Principally the operating method of the second aspect of the present invention shares the advantages of the listening device of the first aspect of the present invention. In particular, the operating method has preferred embodiments that correspond to additional features of the embodiments of the listening device described above. For instance, in the preferred embodiment, the operating method comprises the additional step of comparing the determined values of electric input signal with the stored values and the generating a comparison result signal in dependence of the comparison. Thus, the identifying step can be based on the comparison result signal. It is furthermore preferred that the method comprises the step of storing for each of the number of individual voices a set of processing parameters and choosing one of the number of stored sets of processing parameters, if the identified individual voice is determined to be identical to one of the number of individual voices. In this embodiment, it is preferred that the method comprises a step of controlling the signal processor with the chosen set of processing parameters.

According to a third aspect of the present invention, the above identified technical object is achieved by a computer program for operating a listening device, the computer program comprising program code means for causing the listening device to carry out the steps of the method of the second aspect of the invention, when the computer program is run on a computer controlling the listening device

The computer program of the third aspect of the invention may be stored/distributed on a suitable medium, such as an optical storage medium or a solid-state medium supplied together with or as part of other hardware, but may also be distributed in other forms, such as via the Internet or other wired or wireless telecommunication systems.

### Brief description of the drawings

These and other aspects of the invention will be apparent from and elucidated with reference to the embodiments described hereinafter.

In the following drawings:
FIG. 1 shows schematically and exemplary representations of first and second embodiments of a listening device in accordance with the first aspect of the invention,
FIG. 2 shows exemplary a flow chart illustrating an embodiment of an operating method in accordance with the second aspect of the invention, and
FIG. 3 shows an embodiment of a listening device applied in a system comprising the listening device and an audio gateway and remote control of the listening device, the system being adapted for establishing a communication link between the two devices.

### Description of embodiments

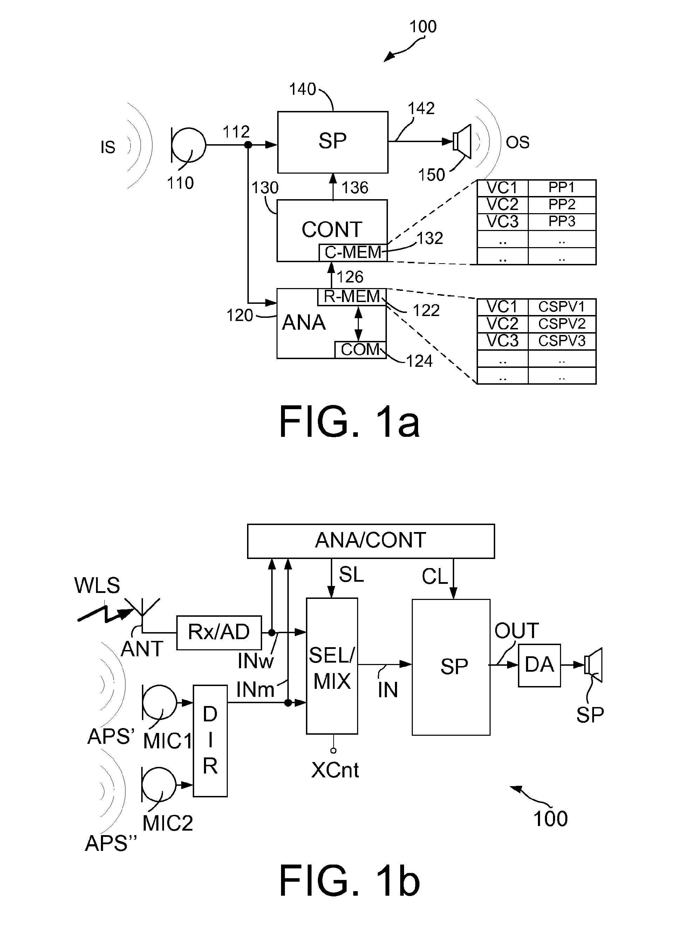

FIG. 1 shows exemplary and schematically embodiments of a listening device 100 in accordance with the first aspect of the present invention. The listening device 100 is specially designed to help people with a pronounced hearing impairment in understanding speech of a certain individual more easily.

As a conventional listening device, too, the listening device 100 of FIG. 1a comprises an input transducer 110, for instance a microphone with an analogue-to-digital converter connected downstream thereof (not shown) that receives an acoustic input signal IS and converts this acoustic input signal into an electric input signal 112. A signal processor 140 of the listening device 100 processes this electric input signal 112 and converts it into an output signal 142 that is eventually, i.e., after optional further processing, to be presented to a wearer (not shown) of the listening device 100, for instance through an output transducer 150, e.g. as an acoustic output sound OS.

The listening device 100 outlined in FIG. 1 can be any kind of a listening device, for instance comprising a hearing aid, a hearing instrument, a hearing aid system, an earphone, a headset and so on. The output transducer can be of any kind appropriate for the user and hearing loss in question. It may e.g. comprise a number of electrodes of a cochlear implant or a vibrator of a bone conducting hearing device. In the embodiments shown in FIG. 1, the output transducer comprises a receiver (speaker) for providing the stimulus as an acoustic signal to the user.

For improving the intelligibility of voice of a certain speaker, an analyzer 120 of the listening device 100 identifies an individual voice in the electric input signal 112 in dependence of determined values of characteristic speech parameters. If the analyzer 120 accomplishes identifying of an individual voice, it passes a corresponding indicator signal 126 to a controller 130. The controller 130 controls the signal processor 140. Upon receiving the indicator signal 126, the controller adjusts process parameters according to which the signal processor 140 is to process the electric input signal 112 to the output signal 142 in dependence of the identified individual voice. In contrast to a conventional amplification scheme, the signal processor 140 now takes into account individually determined processing parameters for processing the electric input signal 112 such that the speech intelligibility is significantly increased with respect to the identified individual voice.

For recognizing the individual voice in the electric input signal 112, the analyzer 120 comprises a recognition memory 122 that stores predetermined characteristic speech parameter values of the number of individual voices. For instance, the recognition memory 122 can be organized as a look-up table 122.1, wherein predetermined characteristic speech parameter values (CSPV1, CSPV2, CSPV3, ...) are associated to a respective of the number of individual voices (VC1, VC2, VC3, ...). After determining the number of characteristic speech parameters in the actual electric input signal 112, the analyzer 120 passes these determined values to a comparator 124 that compares the determined values with the stored values and generates a corresponding comparison result signal in dependence of the comparison. For instance, the comparison result signal yields that the determined values are identical to a stored set of characteristic speech parameter values, for instance identical to the set CSPV2 or, respectively, lie within a predetermined similar value range. The analyzer 120 would then identify the voice VC2 to be the individual voice encoded in the electric input signal 112. After identification, the analyzer passes the aforementioned indicator signal 126 to the controller 130, the indicator signal 126 indicating the individual voice, in the example above: voice VC2.

For adjusting process parameters in dependence of the identified individual voice, the controller 130 comprises a control memory (132) that stores for each of the number of individual voices (VC1, VC2, VC3, ...) a set of processing parameters. Also, the control memory 132 can be organized as a look-up table 132.1 with two columns, wherein each of a number of sets of processing parameters (PP1, PP2, PP3, ...) is associated to one of the number of individual voices (VC1, VC2, VC3, ...). Each of a set of processing parameters is determined such that intelligibility with respect to the respective associated voice is increased. The controller 130 chooses one of a number of stored sets of processing parameters, if the identified individual voice is determined to be identical to one of the selected individual voices. Tying up to the example above, the controller would now choose the processing parameter set PP2 as the indicator signal 126 indicates to the controller that voice 2 (VC2) has been identified in the electric input signal 112.

A controller 130 then controls the signal processor 140 with the chosen set of processing parameters 136, in the example explained above with the set PP2 being associated to voice 2 (VC2).

Both the sets of processing parameters and the characteristic speech parameter values can be determined within a refined fitting process including use of playback of a recording of the number of individual voices. The number of voices that can be identified by the analyzer 120 can be limited, for instance limited to ten voices, wherein one of these voices can be the voice of the designated wearer of the listening device 100.

The recognition memory 122 and the control memory 132 can be implemented in a same physical storage medium.

The characteristic speech parameter can be, for instance, a characteristic frequency, a frequency of a characteristic overtone, a temporal pattern. The processing parameters can be, for instance, a time constant, a frequency dependent amplification parameter, a frequency compression scheme.

The embodiment of a listening device 100 shown in FIG. 1b comprises an input transducer adapted to convert an acoustic input signal to an electric input signal comprising audio in the form of a microphone system comprising two microphones MIC1, MIC2 (receiving acoustic signals APS' and APS", respectively) and a directional unit DIR for generating a weighted combination INm of the two microphone signals. The listening device 100 of FIG. 1b additionally comprises an input transducer comprising a wireless receiver for receiving an electromagnetic signal WLS and for extracting (e.g. demodulating or decoding and digitizing the received signal to provide) an audio signal INw therefrom, cf. antenna ANT and Rx/AD-unit of FIG. 1b. The two input signals INm and INw are connected to a selector or mixer unit SEL/MIX for selecting one of the two input signals or a weighted mixture thereof and providing the resulting input signal IN, which is fed to signal processing unit SP for further enhancement (e.g. incl. processing the signal according to a particular voice). The listening device may additionally or alternatively comprise other input transducers for providing an electric input signal representing an audio signal and which is fed to the selector or mixer unit SEL/MIX. In an embodiment, the listening device comprises a telecoil receiver for receiving an electric input signal from a telecoil, e.g. a telecoil mounted in a particular room or location, e.g. a church or a theatre. The selector or mixer unit SEL/MIX is controlled by a control signal from a user interface or by control signal SL (e.g. automatically controlled according to the detected input signals in the analyzer and controller unit ANA/CONT). The two input signals INm and INw are further connected to the analyzer and controller unit ANA/CONT for identifying a known voice in one or both input signals and to decide which set of stored set processing parameters to apply in the signal processor SP by applying control signal CL to the signal processor unit SP. Additionally, other signal processing may be performed in the signal processing unit, e.g. compression, noise reduction, feedback detection and cancellation, etc. The processed output OUT from the signal processor unit SP is fed to a digital to analogue converter DA whose analogue output is fed to an output transducer, here speaker SP. Alternatively, the output transducer may comprise a number of electrodes of a cochlear implant or a vibrator of a bone conducting hearing device.

The embodiments of listening devices shown in FIG. 1 a and 1b each comprise a forward or signal path between the input transducer (microphone system and/or direct electric input (e.g. a wireless receiver)) and the output transducer. The signal processing unit SP is located in the forward path. The listening device further comprises an analysis path comprising functional components for analyzing the input signal (e.g. the analyzer ANA and controller CONT). Some or all signal processing of the analysis path and/or the signal path may be conducted in the frequency domain or in the time domain whichever is the more beneficial in the application in question.

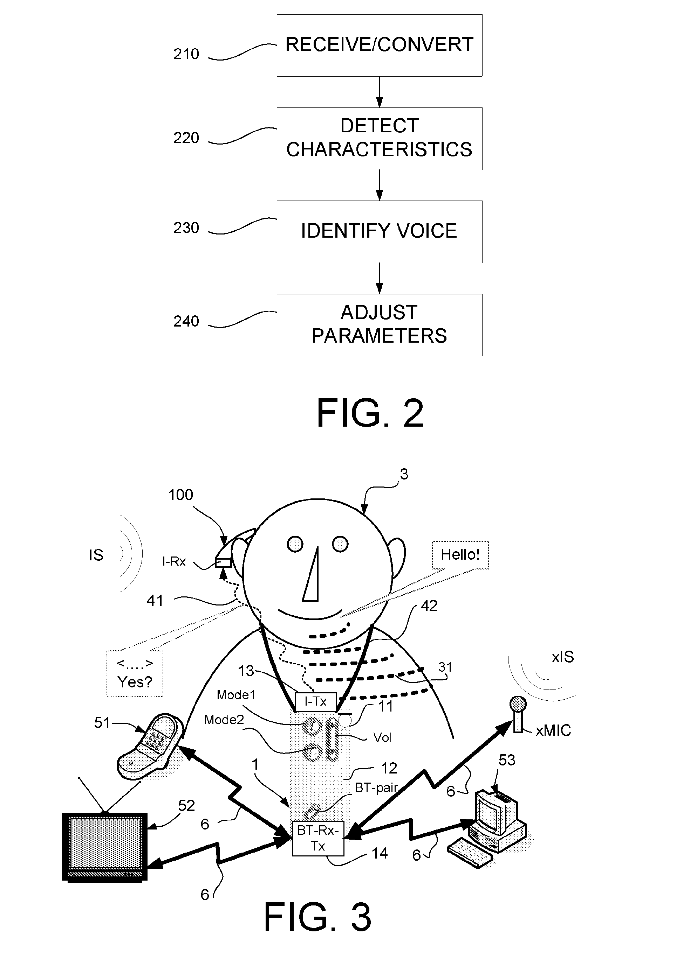

Fig. 2 shows a flow chart for illustrating an operating method 200 in accordance with the second aspect of the present invention. For instance, the listening device 100 can be operated according to the method 200 described in the following.

In a first step 210, an acoustic input signal is received and converted into an electric input signal. In a second step 220, values of a number of characteristic speech parameters of the electric input signal are determined.

In a following step 230, an individual voice is identified in the electric input signal in dependence of the determined values, the individual voice being one of a number of individual voices for which characteristic speech parameter values are stored in a recognition memory of the listening device. In a fourth step 240, processing parameters for processing the electric input signal into an output signal to be presented to a wearer of the listening device are adjusted in dependence of the indentified individual voice.

FIG. 3 shows an embodiment of a listening device applied in a system comprising the listening device 100 and an audio gateway 1 including a remote control function of operational parameters of the listening device, the system being adapted for establishing a communication link between the two devices. The listening device of FIG. 3 is a listening device according to a first aspect of the present invention, e.g. a listening device as illustrated in FIG. 1. Preferably, the listening device100 is a listening device comprising input transducers in the form of at least one microphone (for picking up input sound IS from the environment) as well as a wireless receiver (for receiving a wireless signal comprising audio, e.g. signal 41 from audio gateway 1), as e.g. shown in the embodiment of a listening device of FIG. 1b. FIG. 3 shows an application scenario wherein the audio gateway device 1 comprises an audio selection device adapted for receiving a multitude of audio signals (here from an entertainment device, e.g. a TV 52, a telephone apparatus, e.g. a mobile telephone 51, a computer, e.g. a PC 53, and an external microphone xMIC). In the embodiment of FIG. 3, the microphone 11 of the audio gateway device is adapted for picking up the user's 3 own voice 31 and capable of being connected to one or more of the external audio sources 51, 52, 53 via wireless links 6, here in the form of digital transmission links according to the Bluetooth standard as indicated by the Bluetooth transceiver 14 *(BT-Tx-Rx)* in the audio gateway device 1. The audio sources and the audio gateway device may be paired using the button BT-pair. The links may alternatively be implemented in any other convenient wireless and/or wired manner, and according to any appropriate transmission standard, possibly different for different audio sources. Other audio sources than the ones shown in FIG. 3 may be connectable to the audio gateway, e.g. an audio delivery device (such as a music player or the like). The audio gateway device 1 further comprises a selector/combiner unit (not shown in FIG. 3) adapted for selecting and/or combining an appropriate signal or combination of signals for transmission to the listening device 100. The intended mode of operation of the listening system can be selected by the user via mode selection buttons *Mode1* and *Mode2.* Here *Mode1* indicates e.g. a telephone conversation mode (where the audio signal from a currently actively paired mobile telephone is selected) and *Mode2* indicates e.g. an entertainment device mode (where the audio signal from a currently actively paired entertainment device, e.g. the TV or a music player, is selected). The particular selected mode determines the signals to be selected/combined in the selector/combiner unit for transmission to the listening device. In Mode1, the incoming signal from the mobile telephone is transmitted to the listening device (optionally combined with an own voice signal picked up by microphone 11). In Mode2, the audio signal from an entertainment device is e.g. selected and transmitted to the listening device. A further learning mode may be selected or deselected via the user interface on the audio gateway device 1 (e.g. by pressing one or more of the buttons Mode1 or Mode2 for a predefined time). In the learning mode, the analyser (ANA of FIG. 1a) of the listening device (or a corresponding unit in the audio gateway device) is adapted to extract characteristic speech parameter values from the electric input signal (e.g. based on input sound IS or on an audio signal received from the audio gateway via inductive link 41, or based on the input sound xIS picked up by the extra microphone xMIC and transmuitted to the listening device via the audio gateway) and to define a new individual voice by storing the extracted characteristic speech parameter values associated to a new individual voice identifier in the recognition memory (cf. e.g. FIG. 1a). In the learning mode, the controller (CONT of FIG. 1a) is configured to define a new set of processing parameters according to which intelligibility of the new individual voice is increased for the hearing impaired person, e.g. in dependence of inputs from the hearing impaired persons during the learning mode.

The listening device 100 is shown as a device mounted at the ear of a user 3. The listening device 100 of the embodiment of FIG. 3 comprises a wireless transceiver, here indicated to be based on inductive communication (*I-Rx*)*.* The transceiver (at least) comprises an inductive receiver (i.e. an inductive coil, which is inductively coupled to a corresponding coil in a transceiver (I-Tx) of the audio gateway device 1), which is adapted to receive the audio signal from the audio gateway device (either as a baseband signal or as a modulated (analogue or digital) signal, and in the latter case to extract the audio signal from the modulated signal). The inductive link 41 between the audio gateway device and the listening device is indicated to be one-way, but may alternatively be two-way (e.g. to be able to exchange control signals between transmitting 1 and receiving 100 device, e.g. to agree on an appropriate transmission channel). Alternatively or additionally, the listening device (and/or the audio gateway device) may be adapted to receive an audio signal from a telecoil.

An audio selection device, which may be modified and used according to the present invention is e.g. described in EP 1 460 769 A1, EP 1 981 253 A1 and in WO 2009/135872 A1.

## Claims

1. A listening device (100) comprising
- an input transducer (110) configured to provide an electric input signal (112) representing an audio signal,
- an analyser (120) coupled to the input transducer (110) and comprising a recognition memory (122) configured to store predetermined characteristic speech parameter values for each of a number of individual voices, wherein the analyser (120) is configured to determine values of a number of characteristic speech parameters of the electric input signal (112) and to identify an individual voice in the electric input signal (112) in dependence of the determined values, the individual voice being one of the number of individual voices, and
- a controller (130) coupled to the analyser (120) and configured to control a signal processor (140) of the listening device (100) by adjusting process parameters according to which the signal processor (140) is to process the electric input signal (112) to an output signal (142) to be presented to a wearer of the listening device (100) in dependence of the identified individual voice (126).

2. The listening device (100) of claim 1, wherein the analyser (120) comprises
- a comparator (124) coupled to the recognition memory and configured to compare the determined values of the electric input signal (112) with the stored values and to generate a comparison result signal in dependence of the comparison, wherein
the analyser (120) is configured to identify the individual voice of a speaker based on the comparison result signal.

3. The listening device (100) of claim 2, wherein the controller (130) comprises a control memory (132) configured to store for each of the number of individual voices a set of processing parameters and is configured to choose one of the number of stored sets of processing parameters, if the identified individual voice is determined to be identical to one of the number of individual voices, and to control the signal processor (140) with the chosen set of processing parameters (136).

4. The listening device (100) of claim 3, wherein each set of processing parameters for a respective individual voice has been determined within a refined fitting process including use of playback of a recording of the respective individual voice.

5. The listening device (100) of claim 3 or claim 4, wherein the recognition memory (122) is configured to store predetermined characteristic speech parameter values of a voice of a wearer of the listening device (100) and wherein the control memory is configured to store a personal set of processing parameters adapted to the wearer's voice such that sound of the wearer's own voice is enhanced, if the signal processor (140) processes an electric input signal (112) originating from the wearer.

6. The listening device (100) of one of the preceding claims 3 to 5, additionally configured to operate either in a conventional mode or in a speech optimization mode, wherein
- in the conventional mode, the analyser (120) has not determined an individual voice in the electric input signal (112) and the controller (130) is configured to control the signal processor (140) according to predetermined processing scheme and
- in the speech optimization mode, the analyser (120) has identified the individual voice in the electric input signal (112) and the controller (130) is configured to control the signal processor (140) with the with the chosen set of processing parameters, the chosen set of processing parameters overruling the predetermined processing scheme.

7. The listening device (100) of one of the preceding claims, wherein the analyser (120) is configured to determine a value of a characteristic frequency, e.g., a fundamental frequency, in the electric input signal (112) as one of the number of characteristic speech parameter values.

8. The listening device (100) of one of the preceding claims, wherein the analyser (120) is configured to determine a frequency value of a characteristic overtone in the electric input signal (112) as one of the number of characteristic speech parameter values.

9. The listening device (100) of one of the preceding claims, wherein the analyser (120) is configured to determine a time value of a characteristic temporal pattern in the electric input signal (112) as one of the number of characteristic speech parameter values.

10. The listening device (100) of one of the preceding claims, wherein the processing parameters include at least one of a time constant, a frequency dependent amplification parameter, a frequency compression scheme.

11. The listening device (100) of one of the preceding claims, wherein the input transducer comprises a wireless transceiver.

12. The listening device (100) of one of the preceding claims, wherein the input transducer comprises a microphone.

13. A method (200) of operating a listening device, the method (200) comprising steps of:
- receiving (210) an electric input signal representing an audio signal,
- determining (220) values of a number of characteristic speech parameters of the electric input signal,
- identifying (230) an individual voice in the electric input signal in dependence of the determined values, the individual voice being one of a number of individual voices for which characteristic speech parameter values are stored in a recognition memory of the listening device and
- adjusting (240) processing parameters for processing the electric input signal into an output signal to be presented to a wearer of the listening device in dependence of the indentified individual voice.

14. A method according to claim 13 comprising setting the listening device to a learning mode, wherein characteristic speech parameter values from the electric input signal are extracted and a new individual voice is defined by storing the extracted characteristic speech parameter values associated with a new individual voice identifier in the recognition memory and wherein a new set of processing parameters is defined according to which intelligibility of the new individual voice is increased for the hearing impaired person.

15. Computer program for operating a listening device, the computer program comprising program code means for causing the listening device to carry out the steps of the method as defined in claim 13 or 14, when the computer program is run on a computer controlling the listening device.
